# EUROPEAN PATENT APPLICATION

(11) **EP 3 825 380 A1**
(43) Date of publication of application: **26.05.2021**
(21) Application number: 19837684.0
(22) Date of filing: 18.07.2019
(51) Int. Cl.: C09K 5/04

(54) **COMPOSITION CONTAINING COMBUSTIBLE REFRIGERANT**

(30) Priority: 18.07.2018 JP 2018135376
(71) Applicant: DAIKIN INDUSTRIES, LTD., Osaka 530-8323 (JP)
(72) Inventor: GOTOU, Tomoyuki, Osaka-shi, Osaka 530-8323 (JP); YOTSUMOTO, Yuuki, Osaka-shi, Osaka 530-8323 (JP)
(74) Representative: Hoffmann Eitle
(86) International application number: PCT/JP2019/028334
(87) International publication number: WO 2020/017604

(57) **Abstract**

An object is to provide a composition comprising a flammable refrigerant, the composition having reduced flammability and maintaining sufficient refrigerating capacity compared with when only the flammable refrigerant is used.

Provided is a composition comprising:
(a) a flammable refrigerant; and
(b) at least one organic compound selected from the group consisting of halogenated hydrocarbons individually represented by the following formulas:
CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
CF₃CX₃, wherein each X is the same or different and represents F, Cl, Br, or I, with the proviso that the case in which all X are F is excluded;
CF₃CF₂CY₃, wherein each Y is the same or different and represents F, Cl, Br, or I, with the proviso that the case in which all Y are F is excluded; and
CF₃CF₂CF₂CZ₃, wherein each Z is the same or different and
represents F, Cl, Br, or I, with the proviso that the case in which all Z are F is excluded.

## Description

### Technical Field

The present disclosure relates to a composition comprising a flammable refrigerant.

### Background Art

There has been proposed a composition comprising a mixture of a flammable refrigerant, such as a hydrofluorocarbon (HFC), a fluoroether, a hydrocarbon ether, a hydrocarbon, ammonia, or a mixture thereof, and a fire hazard-reducing agent. As the fire hazard-reducing agent, acetates, borates, carbonates, bicarbonates, phosphates, nitrates, hydroxides, oxides, molybdates, bromides, bromates, chlorates, chlorides, iodides, phosphate esters, organic phosphonates, phosphonium salts, boric acid, organic boron compounds, brominated compounds, chlorinated paraffins, ammonium polyphosphates, melamines, mixtures of water with polyalkylene glycols or polyol esters, perfluorinated lubricants, fluoroketones, fluoroiodo compounds, and mixtures thereof have been proposed (Patent Literature 1).

### Citation List

### Patent Literature

PTL 1: JP2007-511644A

### Summary of Invention

### Technical Problem

An object of the present disclosure is to provide a composition comprising a flammable refrigerant, the composition having flammability lower than that of the flammable refrigerant alone and maintaining sufficient refrigerating capacity compared with when only the flammable refrigerant is used.

### Solution to Problem

Item 1. A composition comprising:
   (a) a flammable refrigerant; and
   (b) at least one organic compound selected from the group consisting of halogenated hydrocarbons individually represented by the following formulas:
      CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
      CF₃CX₃, wherein each X is the same or different and represents F, Cl, Br, or I, with the proviso that the case in which all X are F is excluded;
      CF₃CF₂CY₃, wherein each Y is the same or different and represents F, Cl, Br, or I, with the proviso that the case in which all Y are F is excluded; and
      CF₃CF₂CF₂CZ₃, wherein each Z is the same or different and represents F, Cl, Br, or I, with the proviso that the case in which all Z are F is excluded.
Item 2. The composition according to Item 1, wherein the flammable refrigerant comprises at least one member selected from the group consisting of hydrofluorocarbons (HFCs), hydrofluoroolefins (HFOs), fluoroethers, hydrocarbon ethers, hydrocarbons, and ammonia.
Item 3. The composition according to Item 1, wherein the flammable refrigerant comprises an HFO.
Item 4. The composition according to Item 3, wherein the flammable refrigerant comprises at least one member selected from the group consisting of 2,3,3,3-tetrafluoro-1-propene (HFO-1234yf), trans-1,3,3,3-tetrafluoropropene (HFO-1234ze(E)), cis-1,3,3,3-tetrafluoropropene (HFO-1234ze(Z)), trifluoroethylene (HFO-1123), trans-1,2-difluoroethylene (HFO-1132(E)), and cis-1,2-difluoroethylene (HFO-1132(Z)).
Item 5. The composition according to Item 3 or 4, wherein the total content of the organic compound (b) in a gas phase is 1 mass% or more, based on the entire composition.
Item 6. The composition according to Item 1, wherein the flammable refrigerant comprises an HFC.
Item 7. The composition according to Item 6, wherein the flammable refrigerant comprises at least one member selected from the group consisting of difluoromethane (HFC-32), 1,1,1-trifluoroethane (HFC-143a), 1,1,2-trifluoroethane (HFC-143), and 1,1-difluoroethane (HFC-152a).
Item 8. The composition according to Item 6 or 7, wherein the total content of the organic compound (b) in a gas phase is 19 mass% or more, based on the entire composition.
Item 9. The composition according to any one of Items 1 to 8, wherein each W represents Br.
Item 10. The composition according to any one of Items 1 to 8, wherein each W is the same or different and represents Cl or Br. Item 11.
   The composition according any one of Items 1 to 8, wherein the organic compound (b) is CFClBr₂.
Item 12. The composition according to any one of Items 1 to 8, wherein the organic compound (b) is CF₂I₂.
Item 13. The composition according to any one of Items 1 to 8, wherein each X is the same or different and represents F or Br. Item 14.
   The composition according to any one of Items 1 to 8, wherein the organic compound (b) is CF₃CF₂Br.
Item 15. The composition according to any one of Items 1 to 8, wherein each X is the same or different and represents F or I. Item 16.
   The composition according to any one of Items 1 to 8, wherein the organic compound (b) is CF₃CF₂I.
Item 17. The composition according to any one of Items 1 to 8, wherein each Y is the same or different and represents F or Br. Item 18.
   The composition according to any one of Items 1 to 8, wherein the organic compound is CF₃CF₂CF₂Br.
Item 19. The composition according to any one of Items 1 to 8, wherein the composition comprises a halogenated hydrocarbon having a molar specific heat at constant pressure, C_{P}, of 80 J/mol•K to 260 J/mol•K as the organic compound.
Item 20. An agent for use in reducing flammability of a flammable refrigerant, the agent comprising at least one halogenated hydrocarbon selected from the group consisting of halogenated hydrocarbons individually represented by the following formulas:
   CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
   CF₃CX₃, wherein each X is the same or different and represents F,
   Cl, Br, or I, with the proviso that the case in which all X are F is excluded;
   CF₃CF₂CY₃, wherein each Y is the same or different and represents F, Cl, Br, or I, with the proviso that the case in which all Y are F is excluded; and
   CF₃CF₂CF₂CZ₃, wherein each Z is the same or different and represents F, Cl, Br, or I, with the proviso that the case in which all Z are F is excluded.

### Advantageous Effects of Invention

The present disclosure provides a composition comprising a flammable refrigerant, the composition having flammability lower than that of the flammable refrigerant alone and maintaining sufficient refrigerating capacity compared with when only the flammable refrigerant is used.

### Brief Description of Drawings

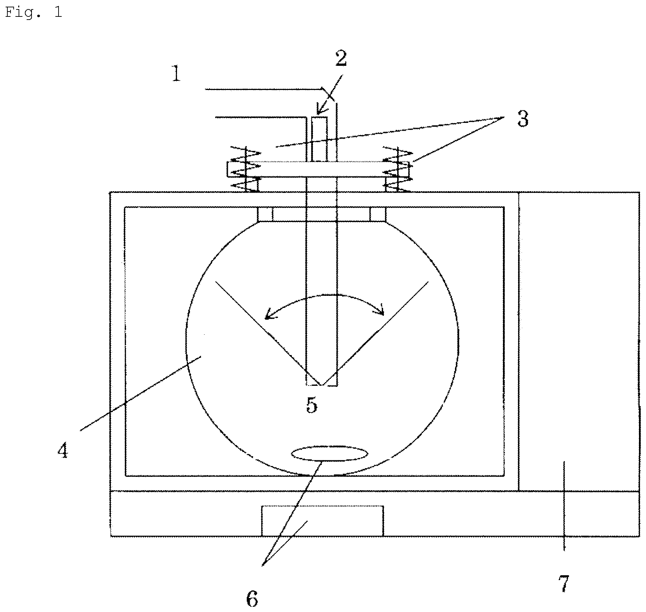

Fig. 1 is a diagram that illustrates a device used in a flammability test.

### Description of Embodiments

In the present specification, the phrase "composition comprising a (flammable) refrigerant" at least includes (1) a refrigerant itself (including a mixture of refrigerants), and a composition that further comprises one or more other components as necessary and that can be mixed with a refrigeration oil to obtain a working fluid for a refrigerating machine, and (2) a working fluid for a refrigerating machine containing a refrigeration oil. In the present specification, of these two embodiments, the composition of (1) is referred to as a "refrigerant composition" so as to distinguish it from a refrigerant itself (including a mixture of refrigerants). Further, the working fluid for a refrigerating machine (2) is referred to as a "refrigeration oil-containing working fluid" so as to distinguish it from the "refrigerant composition."

In the present specification, the phrase "molar specific heat at constant pressure, C_{P}" refers to a value at 298.15 K and 1 atm.

In the present disclosure, the flammability of a refrigerant was determined based on the measuring device and measuring method of a flammability test according to ASTM E681-2009. Specifically, the measurement is performed as follows.

A 12-liter spherical glass flask as shown in Fig. 1 is used so that the combustion state can be visually observed and photographically recorded. When excessive pressure is generated by combustion in the glass flask, gas is allowed to escape from the upper lid. Ignition is achieved by electric discharge from electrodes disposed at one-third the distance from the bottom. The test conditions are as follows.

### Test Conditions

Test vessel: 280-mm ϕ spherical (internal volume: 12 liters) Test temperature: 60°C ± 3°C
Pressure: 101.3 kPa ± 0.7 kPa
Water: 0.0088 g ± 0.0005 g per gram of dry air Mixing ratio of refrigerant composition/air: 1 vol.% increments ±0.2 vol.%
Mixture of refrigerant composition: ±0.1 mass%
Ignition method: AC discharge; voltage: 15 kV; electric current: 30 mA, neon transformer
Electrode spacing: 6.4 mm (1/4 inch)
Spark: 0.4 seconds ± 0.05 seconds

### Evaluation Criteria

When the flame spreads at an angle of 90° or more from the ignition point, it is evaluated as flammable (propagation). When the flame spreads at an angle of less than 90° from the ignition point, it is evaluated that flame propagation is absent (non-flammable).

In the present disclosure, "hydrofluorocarbons (HFCs)" do not include "hydrofluoroolefins (HFOs)."

The present inventors conducted extensive research to achieve the above object and found that the object can be achieved by combining a halogenated hydrocarbon having a specific structure with a flammable refrigerant. The present disclosure has been accomplished by further conducting research based on this finding, and includes the following embodiments.

### 1. Composition Comprising Refrigerant

The composition according to the present disclosure comprises
(a) a flammable refrigerant; and
(b) at least one halogenated hydrocarbon selected from the group consisting of halogenated hydrocarbons individually represented by the following formulas:
   CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
   CF₃CX₃, wherein each X is the same or different and represents F, Cl, Br, or I, with the proviso that the case in which all X are F is excluded;
   CF₃CF₂CY₃, wherein each Y is the same or different and represents F, Cl, Br, or I, with the proviso that the case in which all Y are F is excluded; and
   CF₃CF₂CF₂CZ₃, wherein each Z is the same or different and represents F, Cl, Br, or I, with the proviso that the case in which all Z are F is excluded.

The composition according to the present disclosure is a composition comprising a refrigerant. The composition according to the present disclosure comprises at least a flammable refrigerant as the refrigerant. The composition according to the present disclosure may comprise a single flammable refrigerant, or two or more flammable refrigerants.

The total amount of flammable refrigerant contained as the refrigerant in the composition according to the present disclosure is preferably 90.0 to 99.9 mass%, more preferably 95.0 to 99.9 mass%, and even more preferably 98.0 to 99.9 mass%, based on the entire refrigerant.

The total amount of the flammable refrigerant (a) and the halogenated hydrocarbon (b) contained in the composition according to the present disclosure is preferably 90 to 100 mass%, more preferably 95 to 100 mass%, and even more preferably 98 to 100 mass%, based on the entire composition. The composition according to the present disclosure may consist of the flammable refrigerant (a) and the halogenated hydrocarbon (b).

### 1.1 Flammable Refrigerant (a)

The flammable refrigerant (a) is not limited, and a wide range of flammable refrigerants can be used. The flammable refrigerant (a) preferably refers to a refrigerant classified as having higher flammability (Class 3), being flammable (Class 2), or having lower flammability (Class 2L) according to the American Society of Heating, Refrigerating and Air-Conditioning Engineers (ASHRAE) Standard 34.

Preferable examples of the flammable refrigerant (a) include hydrofluorocarbons (HFCs), hydrofluoroolefins (HFOs), fluoroethers, hydrocarbon ethers, hydrocarbons, ammonia, and the like.

The HFCs, which are flammable refrigerants, are not limited, and a wide range of HFCs can be used.

Specific examples of HFCs, which are flammable refrigerants, include hydrofluoroalkanes and the like.

Specific examples of hydrofluoroalkanes, which are flammable refrigerants, include difluoromethane (HFC-32), fluoromethane (HFC-41), 1,1,1-trifluoroethane (HFC-143a), 1,1,2-trifluoroethane (HFC-143), 1,1-difluoroethane (HFC-152a), fluoroethane (HFC-161), 1,1,1-trifluoropropane (HFC-263fb), and the like.

Specific examples of HFOs, which are flammable refrigerants, include 2,3,3,3-tetrafluoro-1-propene (HFO-1234yf), trans-1,3,3,3-tetrafluoropropene (HFO-1234ze(E)), cis-1,3,3,3-tetrafluoropropene (HFO-1234ze(Z)), trifluoroethylene (HFO-1123), trans-1,2-difluoroethylene (HFO-1132(E)), cis-1,2-difluoroethylene (HFO-1132(Z)), and the like.

The fluoroether refrigerants, which are flammable refrigerants, are not limited, and a wide range of fluoroether refrigerants can be used.

Specific examples of fluoroether refrigerants, which are flammable refrigerants, include ethoxy-nonafluorobutane (C₄F₉OC₂H₅; trade name 3M (trademark) Novec (trademark) 7200 Engineered Fluid) and the like.

The hydrocarbon ether refrigerants, which are flammable refrigerants, are not limited, and a wide range of hydrocarbon ether refrigerants can be used.

Specific examples of hydrocarbon ether refrigerants, which are flammable refrigerants, include dimethyl ether (DME) and the like.

The hydrocarbon refrigerants, which are flammable refrigerants, are not limited, and a wide range of hydrocarbon refrigerants can be used.

Specific examples of hydrocarbon refrigerants, which are flammable refrigerants, include propane, propylene, cyclopropane, n-butane, isobutane, n-pentane, and the like.

As the flammable refrigerant (a), refrigerants classified as having lower flammability (Class 2L) according to the ASHRAE Standard 34 are preferable, HFOs are more preferable, and HFO-1234yf, HFO-1234ze(E), HFO-1234ze(Z), HFO-1123, HFO-1132(E), and HFO-1132(Z) are even more preferable. The HFOs are also preferred in that they themselves have a GWP of less than 10 and low toxicity.

### 1.2 Halogenated Hydrocarbon (b)

The halogenated hydrocarbon (b) is not limited as long as it is at least one halogenated hydrocarbon selected from the group consisting of halogenated hydrocarbons individually represented by the following formulas, and a wide range of halogenated hydrocarbons can be used:
(1) CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
(2) CF₃CX₃, wherein each X is the same or different and represents F, Cl, Br, or I, with the proviso that the case in which all X are F is excluded;
(3) CF₃CF₂CY₃, wherein each Y is the same or different and represents F, Cl, Br, or I, with the proviso that the case in which all Y are F is excluded; and
(4) CF₃CF₂CF₂CZ₃, wherein each Z is the same or different and represents F, Cl, Br, or I, with the proviso that the case in which all Z are F is excluded.

The composition according to the present disclosure may comprise a single halogenated hydrocarbon (b), or two or more halogenated hydrocarbons (b).

The research by the present inventors found that mixing a halogenated hydrocarbon having the above structure, even in a small amount, with a flammable refrigerant reduces the overall flammability of the mixture.

It is preferable that the halogenated hydrocarbon (b) contains no hydrogen atom in the molecule. This provides the advantage that a hydrogen abstraction reaction does not occur, and the combustion of the halogenated hydrocarbon (b) itself is suppressed.

It is preferable that the halogenated hydrocarbon (b) contains no unsaturated bond in the molecule. This provides the advantage that an addition reaction does not occur, and the combustion of the halogenated hydrocarbon (b) itself is suppressed.

The halogenated hydrocarbon (b) preferably contains one or more fluorine atoms in the molecule. This provides the advantage of trapping radicals formed during combustion.

The halogenated hydrocarbon (b) preferably contains at least one element selected from the group consisting of chlorine atoms, bromine atoms, and iodine atoms in the molecule. This provides the advantage of trapping radicals formed during combustion.

The halogenated hydrocarbon (b) represented by formula (1) is preferably a halogenated hydrocarbon in which each W represents Br, in terms of the effect of reducing the overall flammability of the mixture. CFBr₃ is particularly preferable.

The halogenated hydrocarbon (b) represented by formula (1) is also preferably a halogenated hydrocarbon in which each W is the same or different and represents Cl or Br, in terms of the effect of reducing the overall flammability of the mixture. CFClBr₂ and CF₂I₂ are particularly preferable.

The halogenated hydrocarbon (b) represented by formula (2) is preferably a halogenated hydrocarbon in which each X is the same or different and represents F or Br, in terms of the effect of reducing the overall flammability of the mixture. CF₃CF₂Br is particularly preferable.

The halogenated hydrocarbon (b) represented by formula (2) is also preferably a halogenated hydrocarbon in which each X is the same or different and represents F or I, in terms of the effect of reducing the overall flammability of the mixture. CF₃CF₂I is particularly preferable.

The halogenated hydrocarbon (b) represented by formula (3) is preferably a halogenated hydrocarbon in which each Y is the same or different and represents F or Br, in terms of the effect of reducing the overall flammability of the mixture. CF₃CF₂CF₂Br is particularly preferable.

The halogenated hydrocarbon (b) preferably has a specific heat of 80 J/mol•K to 220 J/mol•K, more preferably 80 J/mol•K to 180 J/mol•K, and even more preferably 80 J/mol•K to 140 J/mol•K, in terms of the effect of reducing the overall flammability of the mixture.

Specific examples of preferable halogenated hydrocarbons (b) include CFBr₃, CFClBr₂, CF₂I₂, CF₃CF₂I, CF₃CF₂CF₂Br, and CF₃CF₂CF₂CF₂Br. In particular, CFBr₃ is preferable.

When the composition according to the present disclosure comprises an HFO as the flammable refrigerant (a), the total content of the halogenated hydrocarbon (b) in the gas phase is preferably 1 mass% or more, based on the entire composition. In this case, the total content of the halogenated hydrocarbon (b) in the gas phase is preferably 5 mass% or less, based on the entire composition. Since the content of the halogenated hydrocarbon (b) is low, the composition according to the present disclosure has the advantage that the performance exhibited by the HFO is not significantly impaired. In this respect, the lower limit of the total content (mass%) of the halogenated hydrocarbon (b) in the gas phase based on the entire composition is preferably 4, more preferably 3, even more preferably 2, still even more preferably 1.5, and most preferably 1. The lower limit of the total content (mass%) of the halogenated hydrocarbon (b) in the gas phase based on the entire composition described above is preferable because the flammability of the composition is sufficiently reduced. The upper limit of the total content (mass%) of the halogenated hydrocarbon (b) in the gas phase based on the entire composition is preferably 1.5, more preferably 3, and even more preferably 5. The upper limit of the total content (mass%) of the halogenated hydrocarbon (b) in the gas phase based on the entire composition described above is preferable because the performance of the composition as a refrigerant can be maintained at a level almost equivalent to that of the flammable refrigerant.

When the composition according to the present disclosure comprises an HFC as the flammable refrigerant (a), the total content of the halogenated hydrocarbon (b) in the gas phase is preferably 19 mass% or more, based on the entire composition. Since the content of the halogenated hydrocarbon (b) is low, the composition according to the present disclosure has the advantage that the performance exhibited by the flammable refrigerant is not significantly impaired. In this respect, the lower limit of the total content (mass%) of the halogenated hydrocarbon (b) in the gas phase based on the entire composition is preferably 45, more preferably 40, even more preferably 35, still even more preferably 25, and most preferably 19. The lower limit of the total content (mass%) of the halogenated hydrocarbon (b) in the gas phase based on the entire composition described above is preferable because the flammability of the composition is sufficiently reduced. The upper limit of the total content (mass%) of the halogenated hydrocarbon (b) in the gas phase based on the entire composition is preferably 50, more preferably 40, and even more preferably 30. The upper limit of the total content (mass%) of the halogenated hydrocarbon (b) in the gas phase based on the entire composition described above is preferable because the performance of the composition as a refrigerant can be maintained at a level almost equivalent to that of the flammable refrigerant.

### 1.3 Other Components

The composition according to the present disclosure further comprises at least one other component in addition to the flammable refrigerant (a) and the halogenated hydrocarbon (b). The other component may be at least one member selected from the group consisting of water, tracers, oxygen, air, impurities, and by-products. In the composition according to the present disclosure, the content of the at least one component other than the flammable refrigerant (a) and the halogenated hydrocarbon (b) is preferably more than 0 mass% and 1 mass% or less, and more preferably 1 mass ppm to 0.1 mass%, based on the entire composition.

1.4 Use

The composition according to the present disclosure comprises at least the flammable refrigerant (a) and the halogenated hydrocarbon (b), and can be used in the same application as with the flammable refrigerant. Specifically, for example, the composition according to the present disclosure can be used in obtaining a working fluid for a refrigerating machine by further mixing the composition with at least a refrigeration oil.

### 2. Refrigeration Oil-containing Working Fluid

The refrigeration oil-containing working fluid according to the present disclosure comprises at least the composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition.

The composition of the refrigeration oil-containing working fluid of the present disclosure changes during the refrigeration cycle. More specifically, the refrigeration oil content of the refrigeration oil-containing working fluid of the present disclosure is relatively high in the compressor, and relatively low during the period of time when it is discharged from the compressor in a mist form and circulated through the refrigeration cycle before returning to the compressor. For example, the refrigeration oil content of the refrigeration oil-containing working fluid of the present disclosure is 30 to 70 mass% in the compressor; and is preferably 0 to 10 mass%, and more preferably 1 mass ppm to 20 mass%, during the period of time from when the working fluid is discharged from the compressor until the working fluid is returned to the compressor again.

The refrigeration oil is not limited, and a wide range of refrigeration oils can be used. Examples of refrigeration oils include polyol esters (POEs), polyalkylene glycols (PAGs), polyvinyl ethers (PVEs), and the like.

The refrigeration oil may further contain at least one additive in addition to a base oil. The additive may be at least one member selected from the group consisting of ultraviolet fluorescent dyes, stabilizers, antioxidants, extreme-pressure agents, acid scavengers, oxygen scavengers, copper deactivators, rust inhibitors, oil agents, and antifoaming agents.

The refrigeration oil-containing working fluid according to the present disclosure may further contain at least one additive. Examples of additives include compatibilizing agents and the like.

### 3. Flammability Reducing Agent

The flammability reducing agent according to the present disclosure is an agent for use in reducing the flammability of a flammable refrigerant, the agent comprising the halogenated hydrocarbon (b) described above.

The flammable refrigerant is as described in the description of the composition according to the present disclosure.

### Examples

The present disclosure is described in more detail below with reference to Examples. However, the present disclosure is not limited to the Examples and the like.

### Example 1

Difluoromethane (HFC-32) and CFBr₃ were prepared, and a refrigerant composition was prepared so that the proportions of the flammable refrigerant and the flammability reducing agent in the gas phase were 75 mass% and 25 mass%, respectively.

### Example 2

Difluoromethane (HFC-32) and CFClBr₂ were prepared, and a refrigerant composition was prepared so that the proportions of the flammable refrigerant and the flammability reducing agent in the gas phase were 75 mass% and 25 mass%, respectively.

### Example 3

Difluoromethane (HFC-32) and CF₃CF₂I were prepared, and a refrigerant composition was prepared so that the proportions of the flammable refrigerant and the flammability reducing agent in the gas phase were 75 mass% and 25 mass%, respectively.

### Example 4

Trans-1,3,3,3-tetrafluoropropene (HFO-1234ze(E)) and CFBr₃ were prepared, and a refrigerant composition was prepared so that the proportions of the flammable refrigerant and the flammability reducing agent in the gas phase were 97 mass% and 3 mass%, respectively.

### Example 5

Trans-1,3,3,3-tetrafluoropropene (HFO-1234ze(E)) and CFClBr₂ were prepared, and a refrigerant composition was prepared so that the proportions of the flammable refrigerant and the flammability reducing agent in the gas phase were 97 mass% and 3 mass%, respectively.

### Example 6

Trans-1,3,3,3-tetrafluoropropene (HFO-1234ze(E)) and CF₃CF₂I were prepared, and a refrigerant composition was prepared so that the proportions of the flammable refrigerant and the flammability reducing agent in the gas phase were 97 mass% and 3 mass%, respectively.

### Example 7

1,1-difluoroethane (HFC-152a) and CFBr₃ were prepared, and a refrigerant composition was prepared so that the proportions of the flammable refrigerant and the flammability reducing agent in the gas phase were 70 mass% and 30 mass%, respectively.

### Comparative Example 1

Difluoromethane (HFC-32) and trifluoroiodomethane were prepared, and a refrigerant composition was prepared so that the proportions of the flammable refrigerant and the flammability reducing agent in the gas phase were 75 mass% and 25 mass%, respectively.

### Comparative Example 2

Difluoromethane (HFC-32) and perfluoroethyl isopropyl ketone were prepared, and a refrigerant composition was prepared so that the proportions of the flammable refrigerant and the flammability reducing agent in the gas phase were 75 mass% and 25 mass%, respectively.

### Comparative Example 3

Difluoromethane (HFC-32) and perfluorohexane were prepared, and a refrigerant composition was prepared so that the proportions of the flammable refrigerant and the flammability reducing agent in the gas phase were 75 mass% and 25 mass%, respectively.

### Comparative Example 4

Difluoromethane (HFC-32) and antimony pentoxide were prepared, and a refrigerant composition was prepared so that the proportions of the flammable refrigerant and the flammability reducing agent were 75 mass% and 25 mass%, respectively.

### Comparative Example 5

Trans-1,3,3,3-tetrafluoropropene (HFO-1234ze(E)) and trifluoroiodomethane were prepared, and a refrigerant composition was prepared so that the proportions of the flammable refrigerant and the flammability reducing agent in the gas phase were 97 mass% and 3 mass%, respectively.

### Comparative Example 6

Trans-1,3,3,3-tetrafluoropropene (HFO-1234ze(E)) and perfluoroethyl isopropyl ketone were prepared, and a refrigerant composition was prepared so that the proportions of the flammable refrigerant and the flammability reducing agent in the gas phase were 97 mass% and 3 mass%, respectively.

### Comparative Example 7

Trans-1,3,3,3-tetrafluoropropene (HFO-1234ze(E)) and perfluorohexane were prepared, and a refrigerant composition was prepared so that the proportions of the flammable refrigerant and the flammability reducing agent in the gas phase were 97 mass% and 3 mass%, respectively.

### Comparative Example 8

Trans-1,3,3,3-tetrafluoropropene (HFO-1234ze(E)) and antimony pentoxide were prepared, and a refrigerant composition was prepared so that the proportions of the flammable refrigerant and the flammability reducing agent were 97 mass% and 3 mass%, respectively.

### Comparative Example 9

1,1-difluoroethane (HFC-152a) and perfluoroethyl isopropyl ketone were prepared, and a refrigerant composition was prepared so that the proportions of the flammable refrigerant and the flammability reducing agent in the gas phase were 70 mass% and 30 mass%, respectively.

### Comparative Example 10

Difluoromethane (HFC-32) and perfluoroethyl isopropyl ketone were prepared, and a refrigerant composition was prepared so that the proportions of the flammable refrigerant and the flammability reducing agent in the gas phase were 40 mass% and 60 mass%, respectively.

### Comparative Example 11

Trans-1,3,3,3-tetrafluoropropene (HFO-1234ze(E)) and perfluoroethyl isopropyl ketone were prepared, and a refrigerant composition was prepared so that the proportions of the flammable refrigerant and the flammability reducing agent in the gas phase were 93 mass% and 7 mass%, respectively.

### Comparative Example 12

1,1-difluoroethane (HFC-152a) and perfluoroethyl isopropyl ketone were prepared, and a refrigerant composition was prepared so that the proportions of the flammable refrigerant and the flammability reducing agent in the gas phase were 30 mass% and 70 mass%, respectively.

### Miscibility Test

A total of 19 refrigerant compositions (each containing a flammable refrigerant and a flammability reducing agent; Examples 1 to 7 and Comparative Examples 1 to 12) shown in Tables 1 to 3 were placed in glass tubes (ID 8 mm Φ × OD 12 mm Φ × L 300 mm), adjusted, and sealed. A miscibility test was then performed.

The tubes were observed. When a refrigerant composition was one layer, and the transparent liquid was maintained, the composition was evaluated as A. When the presence of phase separation, turbidity, or solids was confirmed, the composition was evaluated as B.

### Flammability Test

The flammability of the obtained refrigerant compositions was evaluated according to US ASHRAE Standard 34-2013. The flammable range was measured with a measuring device based on ASTM E681-09.

Fig. 1 illustrates a device for performing a flammability test. In Fig. 1, reference numeral 1 indicates an ignition source, reference numeral 2 indicates a sample inlet, reference numeral 3 indicates springs, reference numeral 4 indicates a 12-liter spherical glass flask, reference numeral 5 indicates electrodes, reference numeral 6 indicates a stirrer, and reference numeral 7 indicates an insulated chamber.

A 12-liter spherical glass flask was used so that the combustion state could be visually observed and photographically recorded. When excessive pressure was generated by combustion, gas was allowed to escape from the upper lid. Ignition was achieved by electric discharge from electrodes disposed at one-third the distance from the bottom.

### Test Conditions

Test vessel: 280-mm ϕ spherical (internal volume: 12 liters) Test temperature: 60°C ± 3°C
Pressure: 101.3 kPa ± 0.7 kPa
Water: 0.0088 g ± 0.0005 g per gram of dry air
Mixing ratio of composition/air: 1 vol.% increments ±0.2 vol.% Mixture of composition: ±0.1 wt%
Ignition method: AC discharge; voltage: 15 kV; electric current: 30 mA, neon transformer
Electrode spacing: 6.4 mm (1/4 inch)
Spark: 0.4 seconds ± 0.05 seconds

As evaluation criteria, when the flame spreads at an angle of 90° or more from the ignition point, it was evaluated as flammable (propagation). A composition evaluated as flammable was denoted as B, and a composition evaluated as not flammable was denoted as A. The compositions that did not show miscibility in the miscibility test could not be tested and were denoted as "-" because the proportions of the components were different from the specified proportions.

Tables 1 to 3 show the results of the miscibility test and the flammability test.

**Table 1**

| Item | Example 1 | Example 2 | Example 3 | Example 1 | Example 2 | Example 3 | Example 4 | Example 10 |
|---|---|---|---|---|---|---|---|---|
| Miscibility | A | A | A | A | A | A | B | A |
| Flammability | A | A | A | B | B | B | - | A |

**Table 2**

| Item | Example 4 | Example 5 | Example 6 | Comparative Example 5 | Comparative Example 6 | Comparative Example 7 | Comparative Example 8 | Comparative Example 11 |
|---|---|---|---|---|---|---|---|---|
| Miscibility | A | A | A | A | A | A | B | A |
| Flammability | A | A | A | B | B | B | - | A |

**Table 3**

| Item | Example 7 | Comparative Example 9 | Comparative Example 12 |
|---|---|---|---|
| Miscibility | A | A | A |
| Flammability | A | B | A |

The COP and refrigerating capacity (kJ/m³) of the compositions of Example 1, Example 4, Example 7, Comparative Example 10, Comparative Example 11, and Comparative Example 12 were evaluated using a heat pump. For Example 1 and Comparative Example 10, the heat pump was operated under the following conditions: evaporating temperature of the refrigerant in the evaporator: 0°C; condensation temperature of the refrigerant in the condenser: 45°C; compressor efficiency: 0.7; degree of superheat: 0°C; degree of supercooling: 0°C; compressor efficiency: 0.7. For Example 4, Example 7, Comparative Example 11, and Comparative Example 12, the heat pump was operated under the following conditions: evaporating temperature of the refrigerant in the evaporator: 0°C; condensation temperature of the refrigerant in the condenser: 40°C; compressor efficiency:
0.7; degree of superheat: 5°C; degree of supercooling: 0°C; compressor efficiency: 0.7. Table 4 shows the results.

**Table 4**

| | Evaluation results | | | |
|---|---|---|---|---|
| | COP | Refrigerating capacity (kJ/m³) | Discharge temperature (°C) | Discharge pressure (MPa) |
| Example 1 | 2.23 | 3541 | 67 | 1.956 |
| Comparative Example 10 | 1.28 | 2023 | 38 | 1.118 |
| Example 4 | 3.46 | 1376 | 48 | 0.690 |
| Comparative Example 11 | 3.08 | 1223 | 42 | 0.613 |
| Example 7 | 2.40 | 1181 | 43 | 0.546 |
| Comparative Example 12 | 0.80 | 394 | 14 | 0.182 |

The above results show that the compositions of the present invention achieve significant results; i.e., the compositions of the present invention have flammability lower than that of the flammable refrigerant alone and maintain higher refrigerating capacity than that when conventional flammability reducing agents are used.

### Description of Reference Numerals

- 1:: Ignition source
- 2:: Sample inlet
- 3:: Springs
- 4:: 12-liter glass flask
- 5:: Electrodes
- 6:: Stirrer
- 7:: Insulated chamber

## Claims

1. A composition comprising:
(a) a flammable refrigerant; and
(b) at least one organic compound selected from the group consisting of halogenated hydrocarbons individually represented by the following formulas:
CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
CF₃CX₃, wherein each X is the same or different and represents F, Cl, Br, or I, with the proviso that the case in which all X are F is excluded;
CF₃CF₂CY₃, wherein each Y is the same or different and represents F, Cl, Br, or I, with the proviso that the case in which all Y are F is excluded; and
CF₃CF₂CF₂CZ₃, wherein each Z is the same or different and
represents F, Cl, Br, or I, with the proviso that the case in which all Z are F is excluded.

2. The composition according to claim 1, wherein the flammable refrigerant comprises at least one member selected from the group consisting of hydrofluorocarbons (HFCs), hydrofluoroolefins (HFOs), fluoroethers, hydrocarbon ethers, hydrocarbons, and ammonia.

3. The composition according to claim 1, wherein the flammable refrigerant comprises an HFO.

4. The composition according to claim 3, wherein the flammable refrigerant comprises at least one member selected from the group consisting of 2,3,3,3-tetrafluoro-1-propene (HFO-1234yf), trans-1,3,3,3-tetrafluoropropene (HFO-1234ze(E)), cis-1,3,3,3-tetrafluoropropene (HFO-1234ze(Z)), trifluoroethylene (HFO-1123), trans-1,2-difluoroethylene (HFO-1132(E)), and cis-1,2-difluoroethylene (HFO-1132(Z)).

5. The composition according to claim 3 or 4, wherein the total content of the organic compound (b) in a gas phase is 1 mass% or more, based on the entire composition.

6. The composition according to claim 1, wherein the flammable refrigerant comprises an HFC.

7. The composition according to claim 6, wherein the flammable refrigerant comprises at least one member selected from the group consisting of difluoromethane (HFC-32), 1,1,1-trifluoroethane (HFC-143a), 1,1,2-trifluoroethane (HFC-143), and 1,1-difluoroethane (HFC-152a).

8. The composition according to claim 6 or 7, wherein the total content of the organic compound (b) in a gas phase is 19 mass% or more, based on the entire composition.

9. The composition according to any one of claims 1 to 8, wherein each W represents Br.

10. The composition according to any one of claims 1 to 8, wherein each W is the same or different and represents Cl or Br.

11. The composition according any one of claims 1 to 8, wherein the organic compound (b) is CFClBr₂.

12. The composition according to any one of claims 1 to 8, wherein the organic compound (b) is CF₂I₂.

13. The composition according to any one of claims 1 to 8, wherein each X is the same or different and represents F or Br.

14. The composition according to any one of claims 1 to 8, wherein the organic compound (b) is CF₃CF₂Br.

15. The composition according to any one of claims 1 to 8, wherein each X is the same or different and represents F or I.

16. The composition according to any one of claims 1 to 8, wherein the organic compound (b) is CF₃CF₂I.

17. The composition according to any one of claims 1 to 8, wherein each Y is the same or different and represents F or Br.

18. The composition according to any one of claims 1 to 8, wherein the organic compound is CF₃CF₂CF₂Br.

19. The composition according to any one of claims 1 to 8, wherein the composition comprises a halogenated hydrocarbon having a molar specific heat at constant pressure, C_{P}, of 80 J/mol•K to 260 J/mol•K as the organic compound.

20. An agent for use in reducing flammability of a flammable refrigerant, the agent comprising at least one halogenated hydrocarbon selected from the group consisting of halogenated hydrocarbons individually represented by the following formulas:
CFₙW₍₄₋ₙ₎, wherein each W is the same or different and represents Cl, Br, or I, and n represents 1 or 2, with the proviso that the case in which n is 2, and all W are Cl, and the case in which n is 2, and all W are Br, are excluded;
CF₃CX₃, wherein each X is the same or different and represents F, Cl, Br, or I, with the proviso that the case in which all X are F is excluded;
CF₃CF₂CY₃, wherein each Y is the same or different and represents F, Cl, Br, or I, with the proviso that the case in which all Y are F is excluded; and
CF₃CF₂CF₂CZ₃, wherein each Z is the same or different and
represents F, Cl, Br, or I, with the proviso that the case in which all Z are F is excluded.
